(19) Europäisches Patentamt
European Patent Office
Office européen des brevets

(11) EP 4 498 500 A1

(12) EUROPEAN PATENT APPLICATION
published in accordance with Art. 153(4) EPC

(43) Date of publication:
**29.01.2025 Bulletin 2025/05**

(21) Application number: **23774715.9**

(22) Date of filing: **16.03.2023**

(51) International Patent Classification (IPC):
***H01M 50/403*** *(2021.01)* ***H01M 50/42*** *(2021.01)*
***H01M 50/431*** *(2021.01)* ***H01M 50/46*** *(2021.01)*

(52) Cooperative Patent Classification (CPC):
**H01M 50/403; H01M 50/42; H01M 50/431; H01M 50/46;** Y02E 60/10

(86) International application number:
**PCT/JP2023/010215**

(87) International publication number:
**WO 2023/182119 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.03.2022 JP 2022045375**

(71) Applicant: **Arakawa Chemical Industries, Ltd.**
**Osaka-shi**
**Osaka 541-0046 (JP)**

(72) Inventors:
- **SASAGAWA, Naoki**
  **Tsukuba-shi, Ibaraki 300-2611 (JP)**
- **OZAKI, Shinji**
  **Tsukuba-shi, Ibaraki 300-2611 (JP)**

(74) Representative: **Hasegawa, Kan**
**Patentanwaltskanzlei Hasegawa**
**Untere Hauptstraße 56**
**85354 Freising (DE)**

# (54) POWER STORAGE DEVICE SEPARATOR BINDER AQUEOUS SOLUTION, POWER STORAGE DEVICE SEPARATOR SLURRY, POWER STORAGE DEVICE SEPARATOR, POWER STORAGE DEVICE SEPARATOR/ELECTRODE LAMINATE, AND POWER STORAGE DEVICE

(57) A binder aqueous solution of a separator for a power storage device includes a water-soluble poly(meth)acrylamide and a metal ion having a valence of 2 or higher. A content of the metal ion having a valence of 2 or higher is 0.001 mass ppm to 47 mass ppm with respect to the binder aqueous solution of a separator for a power storage device.



Processed by Luminess, 75001 PARIS (FR)

## Description

Technical Field

The present disclosure relates to a binder aqueous solution of a separator for a power storage device, a slurry of a separator for a power storage device, a separator for a power storage device, a separator/electrode laminate for a power storage device, and a power storage device.

Related Art

In a separator for a power storage device, a binder is used to maintain adhesion between a coating layer (heat-resistant layer) and a base material. The coating layer of the separator includes a non-conductive particle.
The applicant is investigating a technique of using a water-soluble poly(meth)acrylamide as a binder.

Related Art Documents

Patent Documents

Patent Document 1: Japanese Patent Application Laid-Open No. 2018-006333

SUMMARY OF INVENTION

Problem to Be Solved by Invention

A binder aqueous solution of a separator for a power storage device is required to exhibit good coatability and good binding property for a non-conductive particle.
The problem to be solved by the present invention is to provide a binder aqueous solution a separator for a power storage device with good coatability and binding property for a non-conductive particle.

Means for Solving Problem

The inventors of the present invention have found that the above-mentioned problem can be solved by using specific components.
The following items are provided by the present disclosure.

(Item 1) A binder aqueous solution of a separator for a power storage device, wherein

the binder aqueous solution of a separator for a power storage device includes a water-soluble poly(meth) acrylamide and a metal ion having a valence of 2 or higher, and
a content of the metal ion having a valence of 2 or higher is 0.001 mass ppm to 47 mass ppm, based on a mass of the binder aqueous solution of a separator for a power storage device.

(Item 2) A slurry of a separator for a power storage device including:
the binder aqueous solution of a separator for a power storage device according to the above item, and a non-conductive particle.
(Item 3) A separator for a power storage device including:
a dried product of the slurry of a separator for a power storage device according to the above item on a base material.
(Item 4) A separator/electrode laminate for a power storage device including:
a dried product of the slurry of a separator for a power storage device according to the above item on an active material side of an electrode.
(Item 5) A power storage device including:
the separator for a power storage device according to the above item and/or the separator/electrode laminate for a power storage device according to the above item.
(Item A1) The binder aqueous solution of a separator for a power storage device according to any one of the above items, in which the water-soluble poly(meth)acrylamide includes a (meth)acrylamide group-containing compound unit.
(Item A2) The binder aqueous solution of a separator for a power storage device according to any one of the above items, in which the water-soluble poly(meth)acrylamide includes a (meth)acrylamide unit and/or a N,N-dimethyl(meth)acrylamide derived unit.

(Item A3) The binder aqueous solution of a separator for a power storage device according to any one of the above items, in which a mol% content ((meth)acrylamide group-containing compound unit/water-soluble poly(meth)acrylamide) is 10 mol% to 99.97 mol%.

(Item A4) The binder aqueous solution of a separator for a power storage device according to any one of the above items, in which a mol% content ((meth)acrylamide group-containing compound unit/water-soluble poly(meth)acrylamide) is 60 mol% to 99.96 mol%.

(Item A5) The binder aqueous solution of a separator for a power storage device according to any one of the above items, in which a mol% content ((meth)acrylamide group-containing compound unit/water-soluble poly(meth)acrylamide) is 75 mol% to 99.955 mol%.

(Item A6) The binder aqueous solution of a separator for a power storage device according to any one of the above items, in which a mol% content ((meth)acrylamide group-containing compound unit/water-soluble poly(meth)acrylamide) is 99 mol% to 99.95 mol%.

(Item A7) The binder aqueous solution of a separator for a power storage device according to any one of the above items, in which a mol% content ((meth)acrylamide group-containing compound unit/water-soluble poly(meth)acrylamide) is 99 mol% to 99.97 mol%.

(Item A8) The binder aqueous solution of a separator for a power storage device according to any one of the above items, in which a mass% content ((meth)acrylamide group-containing compound unit/water-soluble poly(meth)acrylamide) is 10 mass% to 99.95 mass%.

(Item A9) The binder aqueous solution of a separator for a power storage device according to any one of the above items, in which a mass% content ((meth)acrylamide group-containing compound unit/water-soluble poly(meth)acrylamide) is 60 mass% to 99.94 mass%.

(Item A10) The binder aqueous solution of a separator for a power storage device according to any one of the above items, in which a mass% content ((meth)acrylamide group-containing compound unit/water-soluble poly(meth)acrylamide) is 85 mass% to 99.91 mass%.

(Item A11) The binder aqueous solution of a separator for a power storage device according to any one of the above items, in which a mass% content ((meth)acrylamide group-containing compound unit/water-soluble poly(meth)acrylamide) is 99.1 mass% to 99.9 mass%.

(Item A12) The binder aqueous solution of a separator for a power storage device according to any one of the above items, in which the water-soluble poly(meth)acrylamide includes an unsaturated sulfonic acid and/or a salt unit thereof.

(Item A13) The binder aqueous solution of a separator for a power storage device according to any one of the above items, in which the water-soluble poly(meth)acrylamide includes one or more selected from the group consisting of a (meth)allylsulfonic acid unit, a (meth)acrylamide t-butylsulfonic acid unit, a sodium (meth)allylsulfonate unit, and a (meth)acrylamide t-butylsulfonic acid unit.

(Item A14) The binder aqueous solution of a separator for a power storage device according to any one of the above items, in which a mol% content (unsaturated sulfonic acid and/or salt unit thereof/water-soluble poly(meth)acrylamide) is 0 mol% to 1 mol%.

(Item A15) The binder aqueous solution of a separator for a power storage device according to any one of the above items, in which a mol% content (unsaturated sulfonic acid and/or salt unit thereof/water-soluble poly(meth)acrylamide) is 0.01 mol% to 0.95 mol%.

(Item A16) The binder aqueous solution of a separator for a power storage device according to any one of the above items, in which a mol% content (unsaturated sulfonic acid and/or salt unit thereof/water-soluble poly(meth)acrylamide) is 0.03 mol% to 0.7 mol%.

(Item A17) The binder aqueous solution of a separator for a power storage device according to any one of the above items, in which a mol% content (unsaturated sulfonic acid and/or salt unit thereof/water-soluble poly(meth)acrylamide) is 0.05 mol% to 0.5 mol%.

(Item A18) The binder aqueous solution of a separator for a power storage device according to any one of the above items, in which a mass% content (unsaturated sulfonic acid and/or salt unit thereof/water-soluble poly(meth)acrylamide) is 0 mass% to 1 mass%.

(Item A19) The binder aqueous solution of a separator for a power storage device according to any one of the above items, in which a mass% content (unsaturated sulfonic acid and/or salt unit thereof/water-soluble poly(meth)acrylamide) is 0.01 mass% to 0.9 mass%.

(Item A20) The binder aqueous solution of a separator for a power storage device according to any one of the above items, in which a mass% content (unsaturated sulfonic acid and/or salt unit thereof/water-soluble poly(meth)acrylamide) is 0.02 mass% to 0.8 mass%.

(Item A21) The binder aqueous solution of a separator for a power storage device according to any one of the above items, in which a mass% content (unsaturated sulfonic acid and/or salt unit thereof/water-soluble poly(meth)acrylamide) is 0.05 mass% to 0.3 mass%.

(Item A22) The binder aqueous solution of a separator for a power storage device according to any one of the above items, in which the water-soluble poly(meth)acrylamide includes an unsaturated carboxylic acid and/or a salt unit thereof.

(Item A23) The binder aqueous solution of a separator for a power storage device according to any one of the above items, in which the water-soluble poly(meth)acrylamide includes one or more selected from the group consisting of a (meth)acrylic acid unit, a sodium (meth)acrylate unit, and a lithium (meth)acrylate unit.

(Item A24) The binder aqueous solution of a separator for a power storage device according to any one of the above items, in which a mol% content (unsaturated carboxylic acid and/or salt unit thereof/water-soluble poly(meth) acrylamide) is 0 mol% to 40 mol%.

(Item A25) The binder aqueous solution of a separator for a power storage device according to any one of the above items, in which a mol% content (unsaturated carboxylic acid and/or salt unit thereof/water-soluble poly(meth) acrylamide) is 0 mol% to 10 mol%.

(Item A26) The binder aqueous solution of a separator for a power storage device according to any one of the above items, in which a mass% content (unsaturated carboxylic acid and/or salt unit thereof/water-soluble poly(meth) acrylamide) is 0 mass% to 30 mass%.

(Item A27) The binder aqueous solution of a separator for a power storage device according to any one of the above items, in which a mass% content (unsaturated carboxylic acid and/or salt unit thereof/water-soluble poly(meth) acrylamide) is 0 mass% to 10 mass%.

(Item A28) The binder aqueous solution of a separator for a power storage device according to any one of the above items, in which the water-soluble poly(meth)acrylamide includes an $\alpha,\beta$-unsaturated nitrile unit.

(Item A29) The binder aqueous solution of a separator for a power storage device according to any one of the above items, in which the water-soluble poly(meth)acrylamide includes a (meth)acrylonitrile unit.

(Item A30) The binder aqueous solution of a separator for a power storage device according to any one of the above items, in which a mol% content ($\alpha,\beta$-unsaturated nitrile unit/water-soluble poly(meth)acrylamide) is 0 mol% to 40 mol%.

(Item A31) The binder aqueous solution of a separator for a power storage device according to any one of the above items, in which a mol% content ($\alpha,\beta$-unsaturated nitrile unit/water-soluble poly(meth)acrylamide) is 0 mol% to 10 mol%.

(Item A32) The binder aqueous solution of a separator for a power storage device according to any one of the above items, in which a mass% content ($\alpha,\beta$-unsaturated nitrile unit/water-soluble poly(meth)acrylamide) is 0 mass% to 30 mass%.

(Item A33) The binder aqueous solution of a separator for a power storage device according to any one of the above items, in which a mass% content ($\alpha,\beta$-unsaturated nitrile unit/water-soluble poly(meth)acrylamide) is 0 mass% to 10 mass%.

(Item A34) The binder aqueous solution of a separator for a power storage device according to any one of the above items, in which the water-soluble poly(meth)acrylamide includes a multifunctional monomer unit.

(Item A35) The binder aqueous solution of a separator for a power storage device according to any one of the above items, in which the water-soluble poly(meth)acrylamide includes one or more selected from the group consisting of a N,N'-alkylenebis(meth)acrylamide unit, a tri(allyl group)-containing monomer unit, and a tri((meth)acryloyl group)-containing triazine unit.

(Item A36) The binder aqueous solution of a separator for a power storage device according to any one of the above items, in which a mol% content (multifunctional monomer unit/water-soluble poly(meth)acrylamide) is 0 mol% to 0.3 mol%.

(Item A37) The binder aqueous solution of a separator for a power storage device according to any one of the above items, in which a mol% content (multifunctional monomer unit/water-soluble poly(meth)acrylamide) is 0.05 mol% to 0.2 mol%.

(Item A38) The binder aqueous solution of a separator for a power storage device according to any one of the above items, in which a mass% content (multifunctional monomer unit/water-soluble poly(meth)acrylamide) is 0 mass% to 0.3 mass%.

(Item A39) The binder aqueous solution of a separator for a power storage device according to any one of the above items, in which a mass% content (multifunctional monomer unit/water-soluble poly(meth)acrylamide) is 0.05 mass% to 0.2 mass%.

(Item A40) The binder aqueous solution of a separator for a power storage device according to any one of the above items, in which a mass% content (water-soluble poly(meth)acrylamide/binder aqueous solution of separator for power storage device) is 1 mass% to 20 mass%.

(Item A41) The binder aqueous solution of a separator for a power storage device according to any one of the above items, in which the metal ion having a valence of 2 or higher is one or more selected from the group consisting of a

calcium ion, a magnesium ion, an iron ion, and a manganese ion.
(Item A42) The binder aqueous solution of a separator for a power storage device according to any one of the above items, in which a mass ppm content (metal ion having valence of 2 or higher/binder aqueous solution of separator for power storage device) is 0.001 mass ppm to 47 mass ppm.
(Item A43) The binder aqueous solution of a separator for a power storage device according to any one of the above items, in which a mass ppm content (metal ion having valence of 2 or higher/binder aqueous solution of separator for power storage device) is 0.01 mass ppm to 46 mass ppm.
(Item A44) The binder aqueous solution of a separator for a power storage device according to any one of the above items, in which a mass ppm content (metal ion having valence of 2 or higher/binder aqueous solution of separator for power storage device) is 0.01 mass ppm to 35 mass ppm.
(Item A45) The binder aqueous solution of a separator for a power storage device according to any one of the above items, in which a mass ppm content (metal ion having valence of 2 or higher/binder aqueous solution of separator for power storage device) is 0.1 mass ppm to 25 mass ppm.
(Item A46) The binder aqueous solution of a separator for a power storage device according to any one of the above items, in which a mass ppm content (metal ion having valence of 2 or higher/binder aqueous solution of separator for power storage device) is 0.1 mass ppm to 15.4 mass ppm.
(Item A47) The binder aqueous solution of a separator for a power storage device according to any one of the above items, in which a mass ppm content (metal ion having valence of 2 or higher/binder aqueous solution of separator for power storage device) is 0.1 mass ppm to 9.9 mass ppm.

One or multiple features described above may be provided as further combinations in addition to the explicitly stated combinations.

Effects of Invention

The effects of the present invention are good coatability and good binding property for a non-conductive particle.

DESCRIPTION OF EMBODIMENTS

Throughout the present disclosure, ranges of physical property values, contents, etc. may be appropriately set (e.g., selected from values described in each item below). Specifically, for a numerical value $\alpha$, in the case where A3, A2, A1 (where A3 > A2 > A1), etc. are mentioned as the value, the range of the numerical value $\alpha$ may be: A3 or less, A2 or less, less than A3, less than A2, A1 or more, A2 or more, greater than A1, greater than A2, A1 to A2 (A1 or more and A2 or less), A1 to A3, A2 to A3, A1 or more and less than A3, A1 or more and less than A2, A2 or more and less than A3, greater than A1 and less than A3, greater than A1 and less than A2, greater than A2 and less than A3, greater than A1 and A3 or less, greater than A1 and A2 or less, greater than A2 and A3 or less, etc.
As long as the problem to be solved by the present invention is solved, each component, condition, numerical value, etc. are not particularly limited.
An "$\alpha\beta$ amount (A/B)" means a $\beta$ amount ($\alpha$) of A with respect to B100$\alpha$. $\alpha$ may be, for example, mass%, mol%, mass part, etc. The $\beta$ amount may be, for example, a content, a use amount, etc. A "mass% content (A/B)" means a content (mass%) of A with respect to B100 mass%.
A "$\gamma$ ratio (A/B)" means a $\gamma$ ratio calculated according to a formula "A ÷ B". The $\gamma$ ratio may be, for example, a mass ratio, a molar ratio, etc.
"(Meth)acrylic" means "at least one selected from the group consisting of acrylic and methacrylic". "(Meth) acrylate" means "at least one selected from the group consisting of acrylate and methacrylate". "(Meth)acryloyl" means "at least one selected from the group consisting of acryloyl and methacryloyl".
An alkyl group may be, for example, a linear alkyl group, a branched alkyl group, a cycloalkyl group, etc.
The linear alkyl group may be, for example, methyl group, ethyl group, n-propyl group, n-butyl group, n-pentyl group, n-hexyl group, n-heptyl group, n-octyl group, n-nonyl group, n-decamethyl group, etc.
The branched alkyl group may be, for example, i-propyl group, diethylpentyl group, trimethylbutyl group, trimethylpentyl group, trimethylhexyl group, etc.
The "cycloalkyl group" means a group represented by $-C_nH_{2n+1}$ having a cyclic structure. The cycloalkyl group may be, for example, a monocyclic cycloalkyl group, a crosslinked cycloalkyl group, a condensed cycloalkyl group, etc.
"Monocyclic" means a cyclic structure formed by covalent bonding of carbons without a crosslinked structure therein. "Condensed" means a cyclic structure in which two or more monocycles share two atoms (i.e., sharing (condensing) only one edge of each ring with each other). "Crosslinked" means a cyclic structure in which two or more monocycles share three or more atoms.
The monocyclic cycloalkyl group may be, for example, cyclopentyl group, cyclohexyl group, cycloheptyl group,

cyclodecyl group, 3,5,5-trimethylcyclohexyl group, etc.

The crosslinked cycloalkyl group may be, for example, tricyclodecyl group, adamantyl group, norbornyl group, etc.

[Binder aqueous solution of separator for power storage device: aqueous solution]

The present disclosure relates to a binder aqueous solution of a separator for a power storage device, in which

the binder aqueous solution of a separator for a power storage device includes a water-soluble poly(meth)acrylamide and a metal ion having a valence of 2 or higher, and
a content of the metal ion having a valence of 2 or higher is 0.001 mass ppm to 47 mass ppm, based on a mass of the binder aqueous solution of a separator for a power storage device.

<Water-soluble poly(meth)acrylamide>

The water-soluble poly(meth)acrylamide may be used alone or as a combination of two or more types.

The "water-soluble poly(meth)acrylamide" means a water-soluble polymer including a (meth)acrylamide group-containing compound as a constituent unit.

"Water-soluble" means that, when 0.5 g of the compound is dissolved in 100 g of water at 25°C, an insoluble portion is less than 0.5 mass% (less than 2.5 mg).

The water-insoluble portion (poly(meth)acrylamide) may be, for example, less than 0.5 mass%, less than 0.4 mass%, less than 0.3 mass%, less than 0.2 mass%, less than 0.1 mass%, 0 mass%, etc.

((Meth)acrylamide group-containing compound)

The (meth)acrylamide group-containing compound may be used alone or as a combination of two or more types.

In an embodiment, the (meth)acrylamide group-containing compound is represented by the following structural formula.

[Chemical Formula 1]

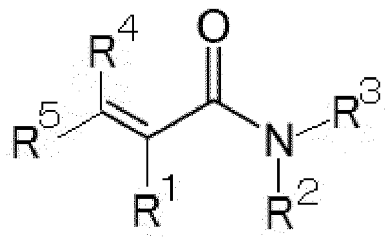

(In the formula, $R^1$ represents a hydrogen atom or a methyl group.

$R^2$ and $R^3$ is each independently selected from a hydrogen atom, a substituted or unsubstituted alkyl group, or an acetyl group. Alternatively, $R^2$ and $R^3$ are groups that together form a ring structure.
$R^4$ and $R^5$ are each independently selected from a hydrogen atom, a substituted or unsubstituted alkyl group, a hydroxy group, a substituted or unsubstituted amino group, and an acetyl group.)

The substituent (substituted amino group) may be, for example, a substituted or unsubstituted alkyl group and the like.

The substituent (substituted alkyl group) may be, for example, a hydroxy group, an amino group ($-NH_2$), an acetyl group, etc.

The ring structure may be, for example, a morpholyl group and the like.

The (meth)acrylamide group-containing compounds may be, for example, (meth)acrylamide, N-isopropyl(meth)acrylamide, N,N-dimethyl(meth)acrylamide, N,N-diethyl(meth)acrylamide, N,N-dimethylaminopropyl(meth)acrylamide, N-methylol(meth)acrylamide, diacetone(meth)acrylamide, maleic acid amide, (meth)acryloylmorpholine, hydroxyethyl(meth)acrylamide, etc.

In an embodiment, the (meth)acrylamide group-containing compound may preferably be (meth)acrylamide and N,N-dimethyl(meth)acrylamide.

Based on 100 mol% of the water-soluble poly(meth)acrylamide, a content of the (meth)acrylamide group-containing compound unit may be, for example, 99.97 mol%, 99.96 mol%, 99.955 mol%, 99.95 mol%, 99.94 mol%, 99.92 mol%, 99.90 mol%, 99.85 mol%, 99.80 mol%, 99.75 mol%, 99.70 mol%, 99.65 mol%, 99.6 mol%, 99.5 mol%, 99.4 mol%, 99.3 mol%, 99.2 mol%, 99.1 mol%, 99 mol%, 98 mol%, 95 mol%, 90 mol%, 89 mol%, 85 mol%, 80 mol%, 75 mol%, 70 mol%, 65 mol%, 60 mol%, 55 mol%, 50 mol%, 45 mol%, 40 mol%, 35 mol%, 30 mol%, 25 mol%, 20 mol%, 15 mol%, 10 mol%, etc. In an embodiment, the content may preferably be 10 mol% to 99.97 mol%, more preferably 60 mol% to 99.96 mol%, even more preferably 75 mol% to 99.955 mol%, and particularly preferably 99 mol% to 99.95 mol%.

A mass% content ((meth)acrylamide group-containing compound unit/water-soluble poly(meth)acrylamide) may be, for example, 99.95 mass%, 99.94 mass%, 99.91 mass%, 99.9 mass%, 99.8 mass%, 99.7 mass%, 99.6 mass%, 99.5 mass%, 99.4 mass%, 99.3 mass%, 99.2 mass%, 99.1 mass%, 99 mass%, 98 mass%, 95 mass%, 90 mass%, 85 mass%, 80 mass%, 75 mass%, 70 mass%, 65 mass%, 60 mass%, 55 mass%, 50 mass%, 45 mass%, 40 mass%, 35 mass%, 30 mass%, 25 mass%, 20 mass%, 15 mass%, 10 mass%, etc. In an embodiment, the content may preferably be 10 mass% to 99.95 mass%, more preferably 60 mass% to 99.94 mass%, even more preferably 85 mass% to 99.91 mass%, and particularly preferably 99.1 mass% to 99.9 mass%.

(Unsaturated sulfonic acid and/or salt thereof)

In an embodiment, the water-soluble poly(meth)acrylamide may optionally include an unsaturated carboxylic acid and/or a salt unit thereof. The unsaturated sulfonic acid and/or the salt thereof may be used alone or as a combination of two or more types.

The unsaturated sulfonic acid may be, for example, α,β-ethylenically unsaturated sulfonic acid, (meth)acrylamide group-containing unsaturated sulfonic acid, unsaturated sulfonic acid carboxylic acid ester, etc.

The α,β-ethylenically unsaturated sulfonic acid may be, for example, vinylsulfonic acid, styrenesulfonic acid, (meth)allylsulfonic acid, etc.

The (meth)acrylamide group-containing unsaturated sulfonic acid may be, for example, (meth)acrylamide t-butylsulfonic acid, 2-(meth)acrylamide-2-methylpropanesulfonic acid, 2-(meth)acrylamide-2-hydroxypropanesulfonic acid, etc.

The unsaturated sulfonic acid carboxylic acid ester may be, for example, 3-sulfopropane (meth)acrylic acid ester, bis-(3-sulfopropyl)itaconic acid ester, etc.

Compounds that correspond to both the "(meth)acrylamide group-containing compound" and the "unsaturated sulfonic acid and/or salt thereof" are taken as "unsaturated sulfonic acid and/or salt thereof".

The unsaturated sulfonic acid salt may be, for example, unsaturated sulfonic acid inorganic salt, unsaturated sulfonic acid organic salt, etc.

The unsaturated sulfonic acid inorganic salt may be, for example, unsaturated sulfonic acid sodium salt, unsaturated sulfonic acid lithium salt, unsaturated sulfonic acid calcium salt, etc.

The unsaturated sulfonic acid organic salt may be, for example, unsaturated sulfonic acid ammonium salt, unsaturated sulfonic acid amine salt, etc.

A mol% content (unsaturated sulfonic acid and/or salt unit thereof/water-soluble poly(meth)acrylamide) may be, for example, 1 mol%, 0.95 mol%, 0.9 mol%, 0.85 mol%, 0.8 mol%, 0.75 mol%, 0.7 mol%, 0.65 mol%, 0.6 mol%, 0.55 mol%, 0.5 mol%, 0.45 mol%, 0.4 mol%, 0.35 mol%, 0.3 mol%, 0.25 mol%, 0.2 mol%, 0.15 mol%, 0.1 mol%, 0.05 mol%, 0.04 mol%, 0.03 mol%, 0.02 mol%, 0.01 mol%, 0 mol%, etc. In an embodiment, the content may preferably be 0 mol% to 1 mol%, more preferably 0.01 mol% to 0.95 mol%, even more preferably 0.03 mol% to 0.7 mol%, and still more preferably 0.05 mol% to 0.5 mol%.

A mass% content (unsaturated sulfonic acid and/or salt unit thereof/water-soluble poly(meth)acrylamide) may be, for example, 1 mass%, 0.95 mass%, 0.9 mass%, 0.85 mass%, 0.8 mass%, 0.75 mass%, 0.7 mass%, 0.65 mass%, 0.6 mass%, 0.55 mass%, 0.5 mass%, 0.45 mass%, 0.4 mass%, 0.35 mass%, 0.3 mass%, 0.25 mass%, 0.2 mass%, 0.15 mass%, 0.1 mass%, 0.05 mass%, 0.01 mass%, 0 mass%, etc. In an embodiment, the content may preferably be 0 mass% to 1 mass%, more preferably 0.01 mass% to 0.9 mass%, even more preferably 0.02 mass% to 0.8 mass%, and still more preferably 0.05 mass% to 0.3 mass%.

(Unsaturated carboxylic acid and/or salt thereof)

In an embodiment, the water-soluble poly(meth)acrylamide may optionally include an unsaturated carboxylic acid and/or a salt unit thereof. The unsaturated carboxylic acid and/or the salt thereof may be used alone or as a combination of two or more types.

The unsaturated carboxylic acid may be, for example, (meth)acrylic acid, crotonic acid, maleic acid, fumaric acid, itaconic acid, etc.

The unsaturated carboxylic acid salt may be, for example, unsaturated carboxylic acid inorganic salt, unsaturated carboxylic acid organic salt, etc.

The unsaturated carboxylic acid inorganic salt may be, for example, unsaturated carboxylic acid sodium salt, unsaturated carboxylic acid lithium salt, unsaturated carboxylic acid calcium salt, etc.

The unsaturated carboxylic acid organic salt may be, for example, unsaturated carboxylic acid ammonium salt, unsaturated carboxylic acid amine salt, etc.

A mol% content (unsaturated carboxylic acid and/or salt unit thereof/water-soluble poly(meth)acrylamide) may be, for example, 30 mol%, 25 mol%, 20 mol%, 15 mol%, 10 mol%, 5 mol%, 4 mol%, 2 mol%, 1 mol%, 0 mol%, etc. In an embodiment, the content may preferably be 0 mol% to 40 mol%, more preferably 0 mol% to 10 mol%, even more preferably 0 mol% to 5 mol%, and still more preferably 0 mol% to 1 mol%.

A mass% content (unsaturated carboxylic acid and/or salt unit thereof/water-soluble poly(meth)acrylamide) may be, for example, 30 mass%, 29 mass%, 25 mass%, 20 mass%, 15 mass%, 10 mass%, 5 mass%, 4 mass%, 2 mass%, 1 mass%, 0 mass%, etc. In an embodiment, the content may preferably be 0 mass% to 30 mass%, more preferably 0 mass% to 25 mass%, even more preferably 0 mass% to 10 mass%, and still more preferably 0 mass% to 5 mass%.

(α,β-unsaturated nitrile)

In an embodiment, the water-soluble poly(meth)acrylamide may optionally include an α,β-unsaturated nitrile unit. The α,β-unsaturated nitrile may be used alone or as a combination of two or more types.

The α,β-unsaturated nitrile may be, for example, (meth)acrylonitrile, α-chloro(meth)acrylonitrile, α-ethyl(meth) acrylonitrile, vinylidene cyanide, etc.

A mol% content (α,β-unsaturated nitrile unit/water-soluble poly(meth)acrylamide) may be, for example, 40 mol%, 35 mol%, 30 mol%, 25 mol%, 20 mol%, 15 mol%, 10 mol%, 5 mol%, 4 mol%, 2 mol%, 1 mol%, 0 mol%, etc. In an embodiment, the content may preferably be 0 mol% to 40 mol%, more preferably 0 mol% to 10 mol%, even more preferably 0 mol% to 5 mol%, and still more preferably 0 mol% to 1 mol%.

A mass% content (α,β-unsaturated nitrile unit/water-soluble poly(meth)acrylamide) may be, for example, 30 mass%, 25 mass%, 20 mass%, 15 mass%, 10 mass%, 5 mass%, 4 mass%, 2 mass%, 1 mass%, 0 mass%, etc. In an embodiment, the content may preferably be 0 mass% to 30 mass%, more preferably 0 mass% to 25 mass%, even more preferably 0 mass% to 10 mass%, and still more preferably 0 mass% to 5 mass%.

(Multifunctional monomer)

In an embodiment, the water-soluble poly(meth)acrylamide may optionally include a multifunctional monomer unit. The multifunctional monomer may be used alone or as a combination of two or more types.

The "multifunctional monomer" means a monomer having two or more ethylenically unsaturated double bonds.

The multifunctional monomer may be, for example, N,N'-alkylenebis(meth)acrylamide, tri(allyl group)-containing monomer, tri((meth)acryloyl group)-containing triazine, etc.

The N,N'-alkylenebis(meth)acrylamide may be, for example, N,N'-methylenebis(meth)acrylamide, N,N'-ethylenebis(meth)acrylamide, etc.

The tri(allyl group)-containing monomer may be, for example, triallyl isocyanurate, triallyl trimellitate, triallylamine, triallyl(meth)acrylamide, etc.

The tri((meth)acryloyl group)-containing triazine may be, for example, 1,3,5-tri((meth)acryloyl)-1,3,5-triazine, 1,3,5-tri((meth)acryloyl)hexahydro-1,3,5-triazine, etc.

A mol% content (multifunctional monomer unit/water-soluble poly(meth)acrylamide) may be, for example, 10 mol%, 9 mol%, 8 mol%, 7 mol%, 6 mol%, 5 mol%, 4 mol%, 3 mol%, 2 mol%, 1 mol%, 0.9 mol%, 0.7 mol%, 0.5 mol%, 0.3 mol%, 0.2 mol%, 0.15 mol%, 0.1 mol%, 0.05 mol%, 0 mol%, etc. In an embodiment, the content may preferably be 0 mol% to 10 mol%, more preferably 0 mol% to 0.3 mol%, and even more preferably 0.05 mol% to 0.2 mol%.

A mass% content (multifunctional monomer unit/water-soluble poly(meth)acrylamide) may be, for example, 10 mass%, 9 mass%, 8 mass%, 7 mass%, 6 mass%, 5 mass%, 4 mass%, 3 mass%, 2 mass%, 1 mass%, 0.9 mass%, 0.7 mass%, 0.5 mass%, 0.3 mass%, 0.1 mass%, 0.05 mass%, 0 mass%, etc. In an embodiment, the content may preferably be 0 mass% to 10 mass%, more preferably 0 mass% to 0.3 mass%, and even more preferably 0.05 mass% to 0.2 mass%.

(Monomer other than those described above: other component)

The water-soluble poly(meth)acrylamide described above may optionally include a monomer (other component) unit that is not any of the (meth)acrylamide group-containing compound, the unsaturated carboxylic acid and/or the salt thereof, the unsaturated sulfonic acid and/or the salt thereof, and the α,β-unsaturated nitrile. The "other component" may be used alone or as a combination of two or more types.

The other component may be, for example, unsaturated phosphoric acid, hydroxyl group-containing (meth) acrylic acid ester, hydroxyl group-free (meth)acrylic acid ester, conjugated diene, aromatic vinyl compound, salts thereof,

etc.

The unsaturated phosphoric acid may be, for example, vinylphosphonic acid, vinyl phosphate, bis((meth) acryloxyethyl) phosphate, diphenyl-2-(meth)acryloyloxyethyl phosphate, dibutyl-2-(meth)acryloyloxyethyl phosphate, dioctyl-2-(meth)acryloyloxyethyl phosphate, monomethyl-2-(meth)acryloyloxyethyl phosphate, 3-(meth)acryloxy-2-hydroxypropane phosphoric acid, etc.

The hydroxyl group-containing (meth)acrylic acid ester may be, for example, hydroxyl group-containing linear (meth)acrylic acid ester, hydroxyl group-containing branched (meth)acrylic acid ester, etc.

The hydroxyl group-containing linear (meth)acrylic acid ester may be, for example, 2-hydroxyethyl (meth) acrylate, 3-hydroxypropyl (meth)acrylate, 4-hydroxybutyl (meth)acrylate, etc.

The hydroxyl group-containing branched (meth)acrylic acid ester may be, for example, 1-hydroxyethyl (meth) acrylate, 1-hydroxypropyl (meth)acrylate, 2-hydroxypropyl (meth)acrylate, 2-hydroxy-1-methylethyl (meth)acrylate, 1-hydroxy-2-methylethyl (meth)acrylate, 1-hydroxybutyl (meth)acrylate, 2-hydroxybutyl (meth)acrylate, 3-hydroxybutyl (meth)acrylate, 1-hydroxy-1-methyl-propyl (meth)acrylate, 2-hydroxy-1-methyl-propyl (meth)acrylate, 3-hydroxy-1-methyl-propyl (meth)acrylate, 1-ethyl-2-hydroxyethyl (meth)acrylate, 1-hydroxy-2-methyl-propyl (meth)acrylate, 2-hydroxy-2-methyl-propyl (meth)acrylate, 3-hydroxy-2-methyl-propyl (meth)acrylate, 1,1-dimethyl-2-hydroxyethyl (meth) acrylate, etc.

The hydroxyl group-free (meth)acrylic acid ester may be, for example, hydroxyl group-free linear (meth)acrylic acid ester, hydroxyl group-free branched (meth)acrylic acid ester, hydroxyl group-free alicyclic (meth)acrylic acid ester, hydroxyl group-free substituted (meth)acrylic acid ester, etc.

The hydroxyl group-free linear (meth)acrylic acid ester may be, for example, methyl (meth)acrylate, ethyl (meth) acrylate, n-propyl (meth)acrylate, n-butyl (meth)acrylate, n-amyl (meth)acrylate, hexyl (meth)acrylate, n-octyl (meth) acrylate, nonyl (meth)acrylate, decyl (meth)acrylate, etc.

The hydroxyl group-free branched (meth)acrylic acid ester may be, for example, i-propyl (meth)acrylate, i-butyl (meth)acrylate, i-amyl (meth)acrylate, 2-ethylhexyl (meth)acrylate, etc.

The hydroxyl group-free alicyclic (meth)acrylic acid ester may be, for example, cyclohexyl (meth)acrylate and the like.

The conjugated diene may be, for example, 1,3-butadiene, 2-methyl-1,3-butadiene, 2,3-dimethyl-1,3-butadiene, 2-chloro-1,3-butadiene, substituted linear conjugated pentadiene, substituted and side-chain conjugated hexadiene, etc.

The aromatic vinyl compound may be, for example, styrene, $\alpha$-methylstyrene, p-methylstyrene, vinyltoluene, chlorostyrene, divinylbenzene, etc.

A mass% content (other component unit/water-soluble poly(meth)acrylamide) may be, for example, less than 10 mass%, less than 9 mass%, less than 7 mass%, less than 5 mass%, less than 4 mass%, less than 2 mass%, less than 1 mass%, less than 0.9 mass%, less than 0.7 mass%, less than 0.5 mass%, less than 0.4 mass%, less than 0.2 mass%, less than 0.1 mass%, 0 mass%, etc. In an embodiment, the content may preferably be less than 10 mass%, more preferably less than 5 mass%, even more preferably less than 1 mass%, and particularly preferably 0 mass%.

A mol% content (other component unit/water-soluble poly(meth)acrylamide) may be, for example, less than 10 mol%, less than 9 mol%, less than 7 mol%, less than 5 mol%, less than 4 mol%, less than 3 mol%, less than 2 mol%, less than 1 mol%, 0 mol%, etc. In an embodiment, the content is preferably less than 10 mol%, more preferably less than 5 mol%, even more preferably less than 1 mol%, and particularly preferably 0 mol%.

<Manufacturing method (water-soluble poly(meth)acrylamide)>

A manufacturing method (water-soluble poly(meth)acrylamide) may be, for example, a radical polymerization method and the like. In an embodiment, a polymerization temperature may preferably be 50°C to 100°C. In an embodiment, a polymerization time may preferably be 1 hour to 10 hours.

A radical polymerization initiator may be, for example, an azo initiator, persulfate, a redox polymerization initiator, etc.

The azo initiator may be, for example, 2,2'-azobis-2-amidinopropane dihydrochloride and the like.

The persulfate may be, for example, potassium persulfate, ammonium persulfate, etc.

The redox polymerization initiator may be, for example, a system combining the above persulfate with a reducing agent and the like.

The reducing agent may be, for example, sodium bisulfite and the like.

A mass% use amount (radical polymerization initiator/monomer group) may preferably be 0.05 mass% to 5.0 mass%, and more preferably 0.1 mass% to 3.0 mass%.

<Physical properties and the like (water-soluble poly(meth)acrylamide)>

A weight average molecular weight (Mw: water-soluble poly(meth)acrylamide) may be, for example, 6 million, 5.5

million, 5 million, 4.5 million, 4 million, 3.5 million, 3 million, 2.5 million, 2 million, 1.5 million, 1 million, 950,000, 900,000, 850,000, 800,000, 750,000, 700,000, 650,000, 600,000, 550,000, 500,000, 450,000, 400,000, 350,000, 300,000, 250,000, 200,000, 150,000, 100,000, etc. In an embodiment, the weight average molecular weight may preferably be 100,000 to 6 million, and more preferably 350,000 to 6 million.

A number average molecular weight (Mn: water-soluble poly(meth)acrylamide) may be, for example, 6 million, 5.5 million, 5 million, 4.5 million, 4 million, 3.5 million, 3 million, 2.5 million, 2 million, 1.5 million, 1 million, 950,000, 900,000, 850,000, 800,000, 750,000, 700,000, 650,000, 600,000, 550,000, 500,000, 450,000, 400,000, 300,000, 200,000, 100,000, 50,000, 10,000, etc. In an embodiment, the number average molecular weight may preferably be 10,000 or more.

A molecular weight distribution (Mw/Mn: water-soluble poly(meth)acrylamide) may be, for example, 15, 14, 13, 11, 10, 9, 7.5, 5, 4, 3, 2.9, 2.5, 2, 1.5, 1.1, etc. In an embodiment, the molecular weight distribution may preferably be 1.1 to 15.

Measurement conditions (weight average molecular weight, number average molecular weight, and molecular weight distribution) may be, for example, the following conditions.

- Measurement instrument: GPC (model No.: HLC-8420) manufactured by Tosoh Corporation
- Column: TSKgel guardcolumn $PW_{XL}$, TSK-GEL G4000, TSK-GEL $\alpha$-M (all manufactured by Tosoh Corporation)
- Eluent: 0.2M $NaNO_3$ 50mM phosphate buffer/acetonitrile = 90/10 (v/v) aqueous solution
- Column temperature: 40°C
- Calibration curve: standard polyethylene oxide-polyethylene glycol
- Measurement method: dissolving in the eluent such that a concentration of the water-soluble poly(meth)acrylamide becomes 0.10 mass%, filtering, and then performing measurement.

A B-type viscosity (the above aqueous solution) may be, for example, 100,000 mPa·s, 90,000 mPa·s, 80,000 mPa·s, 70,000 mPa·s, 60,000 mPa·s, 50,000 mPa·s, 40,000 mPa·s, 30,000 mPa·s, 20,000 mPa·s, 10,000 mPa·s, 9,000 mPa·s, 8,000 mPa·s, 7,000 mPa·s, 6,000 mPa·s, 5,000 mPa·s, 4,000 mPa·s, 3,000 mPa·s, 2,000 mPa·s, 1,000 mPa·s, etc. In an embodiment, the B-type viscosity may preferably be 1,000 mPa·s to 100,000 mPa·s.

Measurement conditions (B-type viscosity) may be, for example, the following conditions.

Solid content concentration: 15 mass%
Measurement temperature: 25°C
B-type viscometer: product name "B-Type Viscometer Model BM" manufactured by Toki Sangyo Co., Ltd.
Viscosity 100 mPa·s to 10,000 mPa·s: No. 3 rotor, rotational speed 12 rpm
Viscosity exceeding 10,000 mPa·s up to 20,000 mPa·s: No. 3 rotor, rotational speed 6 rpm
Viscosity exceeding 20,000 mPa·s up to 100,000 mPa·s: No. 4 rotor, rotational speed 6 rpm

A glass transition temperature (water-soluble poly(meth)acrylamide) may be, for example, 160°C, 155°C, 150°C, 145°C, 140°C, 135°C, 130°C, 125°C, 120°C, 115°C, 110°C, 105°C, 100°C, 95°C, 90°C, 85°C, 80°C, 75°C, 70°C, 65°C, 60°C, 55°C, 50°C, 45°C, 40°C, 35°C, 30°C, 25°C, 20°C, 15°C, 10°C, 5°C, 0°C, etc. In an embodiment, the glass transition temperature may preferably be 0°C or higher, and more preferably 30°C or higher. Reasons for such preference may be, for example, improvement in mechanical strength, improvement in heat resistance, etc.

A glass transition temperature of a polymer may be calculated according to the Fox equation, based on glass transition temperatures of homopolymers of monomers and mass fractions of monomers.

$$1/Tg = (W_1/Tg_1) + (W_2/Tg_2) + (W_3/Tg_3) + ... + (W_n/Tg_n)$$

[In the Fox equation, Tg represents the glass transition temperature (K) of the polymer to be determined, $W_1$ to $W_n$ represent the mass fraction of each monomer, and $Tg_1$ to $Tg_n$ represent the glass transition temperature (K) of the homopolymer of each monomer.]

The glass transition temperature of a homopolymer of a monomer may be measured by a differential scanning calorimeter (DSC), a differential thermal analyzer (DTA), a thermomechanical analyzer (TMA), etc.

Measurement conditions for the glass transition temperature may be, for example, the following conditions.

Temperature range: -100°C to 300°C
Heating rate: 10°C/min

The glass transition temperature of the homopolymer of the monomer may also be adopted from values described in the literature. Such literature may be, for example, page 325 of "Handbook of Chemistry: Pure Chemistry II" (Revised 5th Edition) edited by the Chemical Society of Japan, and the like. The glass transition temperatures of

homopolymers of monomers may be, for example, the following temperatures.

Acrylamide: 165°C
Acrylic acid: 106°C
Hydroxyethyl acrylate: -15°C
Acrylonitrile: 105°C

A mass% content (water-soluble poly(meth)acrylamide/binder aqueous solution of separator for power storage device) may be, for example, 20 mass%, 19 mass%, 15 mass%, 14 mass%, 12 mass%, 10 mass%, 9 mass%, 7 mass%, 6 mass%, 5 mass%, 4 mass%, 3 mass%, 2 mass%, 1 mass%, etc. In an embodiment, the content may preferably be 1 to 20 mass%.

<Metal ion having valence of 2 or higher>

The metal ion having a valence of 2 or higher may be used alone or as a combination of two or more types.
The metal ion having a valence of 2 or higher may be, for example, a typical metal ion having a valence of 2 or higher, a transition metal ion having a valence of 2 or higher, etc.
The typical metal ion having a valence of 2 or higher may be, for example, alkaline earth metal ion, Group 13 metal ion, etc.
The alkaline earth metal ion may be, for example, magnesium ion, calcium ion, etc.
The Group 13 metal ion may be, for example, aluminum ion and the like.
The transition metal ion having a valence of 2 or higher may be, for example, $4^{th}$ period transition metal ion, $5^{th}$ period transition metal ion, $6^{th}$ period transition metal ion, etc.
The $4^{th}$ period transition metal ion may be, for example, chromium ion, manganese ion, iron ion, cobalt ion, nickel ion, copper ion, etc.
The $5^{th}$ period transition metal ion may be, for example, ruthenium ion, rhodium ion, etc.
The $6^{th}$ period transition metal ion may be, for example, platinum ion, gold ion, etc.
The metal ion having a valence of 2 or higher may be added to the aqueous solution as a corresponding metal salt.
In an embodiment, the metal ion having a valence of 2 or higher may preferably be alkaline earth metal ion and $4^{th}$ period transition metal ion, and more preferably calcium ion, magnesium ion, iron ion, and manganese ion.
A mass ppm content (metal ion having valence of 2 or higher/binder aqueous solution of separator for power storage device) may be, for example, 47 mass ppm, 46 mass ppm, 45 mass ppm, 40 mass ppm, 35 mass ppm, 30 mass ppm, 25 mass ppm, 20 mass ppm, 16 mass ppm, 15.4 mass ppm, 15 mass ppm, 11 mass ppm, 10 mass ppm, 9.9 mass ppm, 9 mass ppm, 7 mass ppm, 5 mass ppm, 4.9 mass ppm, 4.8 mass ppm, 4.7 mass ppm, 4.5 mass ppm, 4.0 mass ppm, 3.5 mass ppm, 3.0 mass ppm, 2.5 mass ppm, 2.0 mass ppm, 1.5 mass ppm, 1.0 mass ppm, 0.9 mass ppm, 0.7 mass ppm, 0.6 mass ppm, 0.5 mass ppm, 0.4 mass ppm, 0.2 mass ppm, 0.1 mass ppm, 0.09 mass ppm, 0.05 mass ppm, 0.03 mass ppm, 0.01 mass ppm, 0.009 mass ppm, 0.005 mass ppm, 0.002 mass ppm, 0.001 mass ppm, etc. In an embodiment, the content may preferably be 0.001 to 47 mass ppm, more preferably 0.01 to 46 mass ppm, even more preferably 0.01 mass ppm to 35 mass ppm, still more preferably 0.1 mass ppm to 25 mass ppm, 0.1 mass ppm to 15.4 mass ppm, and particularly preferably 0.1 mass ppm to 9.9 mass ppm. Reasons for such particular preference may be, for example, improvement in binding properties and the like.
A mass ppm content (typical metal ion having valence of 2 or higher/binder aqueous solution of separator for power storage device) may be, for example, 47 mass ppm, 45 mass ppm, 40 mass ppm, 35 mass ppm, 30 mass ppm, 25 mass ppm, 20 mass ppm, 16 mass ppm, 15.4 mass ppm, 15 mass ppm, 11 mass ppm, 10 mass ppm, 9.9 mass ppm, 9 mass ppm, 7 mass ppm, 5 mass ppm, 4.9 mass ppm, 4.8 mass ppm, 4.7 mass ppm, 4.5 mass ppm, 4.0 mass ppm, 3.5 mass ppm, 3.0 mass ppm, 2.5 mass ppm, 2.0 mass ppm, 1.5 mass ppm, 1.0 mass ppm, 0.9 mass ppm, 0.7 mass ppm, 0.6 mass ppm, 0.5 mass ppm, 0.4 mass ppm, 0.2 mass ppm, 0.1 mass ppm, 0.09 mass ppm, 0.05 mass ppm, 0.03 mass ppm, 0.01 mass ppm, 0.009 mass ppm, 0.005 mass ppm, 0.002 mass ppm, 0.001 mass ppm, 0 mass ppm, etc. In an embodiment, the content may preferably be 0 mass ppm to 47 mass ppm, more preferably 0 mass ppm to 35 mass ppm, even more preferably 0.01 mass ppm to 12 mass ppm, and particularly preferably 0.1 mass ppm to 9.9 mass ppm. Reasons for such particular preference may be, for example, improvement in binding properties and the like.
A mass ppm content (transition metal ion having valence of 2 or higher/binder aqueous solution of separator for power storage device) may be, for example, 47 mass ppm, 45 mass ppm, 40 mass ppm, 35 mass ppm, 30 mass ppm, 25 mass ppm, 20 mass ppm, 16 mass ppm, 15.4 mass ppm, 15 mass ppm, 11 mass ppm, 10 mass ppm, 9.9 mass ppm, 9 mass ppm, 7 mass ppm, 5 mass ppm, 4.9 mass ppm, 4.8 mass ppm, 4.7 mass ppm, 4.5 mass ppm, 4.0 mass ppm, 3.5 mass ppm, 3.0 mass ppm, 2.5 mass ppm, 2.0 mass ppm, 1.5 mass ppm, 1.0 mass ppm, 0.9 mass ppm, 0.7 mass ppm, 0.6 mass ppm, 0.5 mass ppm, 0.4 mass ppm, 0.2 mass ppm, 0.1 mass ppm, 0.09 mass ppm, 0.05 mass ppm, 0.03 mass ppm, 0.01 mass ppm, 0.009 mass ppm, 0.005 mass ppm, 0.002 mass ppm, 0.001 mass ppm, 0 mass ppm, etc. In an

embodiment, the content may preferably be 0 mass ppm to 47 mass ppm, more preferably 0 mass ppm to 11 mass ppm, even more preferably 0.01 mass ppm to 5 mass ppm, and particularly preferably 0.1 mass ppm to 3 mass ppm. Reasons for such further preference may be, for example, improvement binding properties and the like.

Measurement conditions for the content of the metal ion having a valence of 2 or higher may be, for example, the following conditions.

Measurement method: ICP-MS
Dilution solvent: 1% nitric acid ultrapure water
Dilution concentration: 0.25%

<Water>

The water may be, for example, ultrapure water, pure water, distilled water, ion-exchanged water, tap water, etc.

A mass% content (water/binder aqueous solution of separator for power storage device) may be, for example, 99.9 mass%, 99 mass%, 95 mass%, 90 mass%, 85 mass%, 80 mass%, etc. In an embodiment, the content may preferably be 80 mass% to 99.9 mass%.

A mass ratio [water-soluble poly(meth)acrylamide/water] may be, for example, 0.25, 0.24, 0.22, 0.20, 0.18, 0.15, 0.12, 0.10, 0.09, 0.07, 0.05, etc. In an embodiment, the mass ratio may preferably be 0.05 to 0.25.

<Other binder>

In an embodiment, the binder aqueous solution of a separator for a power storage device may optionally include a binder (other binder) other than the water-soluble poly(meth)acrylamide. The "other binder" may be used alone or as a combination of two or more types.

The other binder may be, for example, a diene-based copolymer, a fluorine-based copolymer, an amide-imide-based copolymer, a copolymer other than those described above, etc.

The diene-based copolymer may be, for example, styrene-butadiene-based copolymer, polybutadiene-based polymer, acrylonitrile-butadiene-based copolymer, methyl methacrylate-butadiene-based copolymer, carboxy-modified styrene-butadiene copolymer, etc.

The fluorine-based copolymer may be, for example, polyvinylidene fluoride (PVDF), polytetrafluoroethylene (PTFE), tetrafluoroethylene-hexafluoropropylene copolymer (FEP), tetrafluoroethylene-perfluoroalkyl vinyl ether copolymer (PFA), ethylene-tetrafluoroethylene copolymer (ETFE), etc.

The amide-imide-based copolymer may be, for example, polyamide (PA), polyimide (PI), polyamide-imide (PAI), aromatic polyamide, etc.

The copolymer other than those described above may be, for example, polyurethane-based polymer, poly(meth)acrylate-based polymer, vinyl chloride-based polymer, vinyl acetate-based polymer, vinyl acetate-ethylene-based copolymer, polyethylene, polypropylene, polyethylene terephthalate, polystyrene-based polymer, alginic acid and a salt thereof, etc.

A mass% content (other binder/water-soluble poly(meth)acrylamide) may be, for example, 100 mass%, 95 mass%, 90 mass%, 85 mass%, 80 mass%, 75 mass%, 70 mass%, 65 mass%, 60 mass%, 55 mass%, 50 mass%, 45 mass%, 40 mass%, 35 mass%, 30 mass%, 25 mass%, 20 mass%, 19 mass%, 17 mass%, 15 mass%, 13 mass%, 10 mass%, 9 mass%, 7 mass%, 5 mass%, 4 mass%, 2 mass%, 1 mass%, 0 mass%, etc. In an embodiment, the content may preferably be 0 mass% to 100 mass%. Reasons for such preference may be, for example, improvement in electrode flexibility, improvement in a discharge capacity retention rate, etc.

<Thickener>

In an embodiment, the binder aqueous solution of a separator for a power storage device may optionally include a thickener. The thickener may be used alone or as a combination of two or more types.

The thickener may be, for example, a cellulose-based polymer and/or a salt thereof, polyvinyl alcohols, (modified) poly(meth)acrylic acid and/or a salt thereof, polyethylene glycol, polyethylene oxide, polyvinylpyrrolidone, oxidized starch, phosphoric acid starch, casein, modified starch, acrylonitrile-butadiene copolymer hydride, etc.

The cellulose-based polymer and/or the salt thereof may be, for example, carboxymethyl cellulose, methyl cellulose, hydroxypropyl cellulose, etc.

The polyvinyl alcohols may be, for example, a copolymer of maleic anhydride and/or fumaric acid with vinyl alcohol, and the like.

A mass% content (thickener/water-soluble poly(meth)acrylamide) may be, for example, 50 mass%, 45 mass%, 40 mass%, 35 mass%, 30 mass%, 25 mass%, 20 mass%, 19 mass%, 17 mass%, 15 mass%, 13 mass%, 10 mass%, 9

mass%, 7 mass%, 5 mass%, 4 mass%, 2 mass%, 1 mass%, 0.5 mass%, 0 mass%, etc. In an embodiment, the content may preferably be 0 mass% to 50 mass%.

<Additive>

The binder aqueous solution of a separator for a power storage device may optionally include, as an additive, an agent that does not correspond to any of the water-soluble poly(meth)acrylamide, the metal ion having a valence of 2 or higher, the water, the other binder, and the thickener. The additive may be used alone or as a combination of two or more types.
The additive may be, for example, a dispersant, a leveling agent, an antioxidant, etc.
The dispersant may be, for example, an anionic dispersant, a cationic dispersant, a nonionic dispersant, a polymeric dispersant, etc.
The leveling agent may be, for example, a surfactant such as an alkyl-based surfactant, a silicone-based surfactant, a fluorine-based surfactant, a metal-based surfactant, etc.
The antioxidant may be, for example, phenolic compound, hydroquinone compound, organophosphorus compound, sulfur compound, phenylenediamine compound, polymer-type phenolic compound, etc. The "polymer-type phenolic compound" means a polymer having a phenolic structure. A weight average molecular weight of the polymer-type phenolic compound may preferably be 200 to 1000, and more preferably 600 to 700.
A mass% content (additive/water-soluble poly(meth)acrylamide) may be, for example, less than 5 mass%, less than 4 mass%, less than 2 mass%, less than 1 mass%, less than 0.9 mass%, less than 0.5 mass%, less than 0.4 mass%, less than 0.2 mass%, less than 0.1 mass%, less than 0.09 mass%, less than 0.05 mass%, less than 0.04 mass%, less than 0.02 mass%, less than 0.01 mass%, 0 mass%, etc.
A mass% content (additive/binder aqueous solution of separator for power storage device) may be, for example, less than 5 mass%, less than 4 mass%, less than 2 mass%, less than 1 mass%, less than 0.9 mass%, less than 0.5 mass%, less than 0.4 mass%, less than 0.2 mass%, less than 0.1 mass%, less than 0.09 mass%, less than 0.05 mass%, less than 0.04 mass%, less than 0.02 mass%, less than 0.01 mass%, 0 mass%, etc.
A pH (binder aqueous solution of separator for power storage device) may be, for example, 9, 8.9, 8.5, 8, 7.9, 7.5, 7, 6.9, 6.5, 6, 5.9, 5.6, 5.5, 5.4, 5.2, 5.1, 5, etc. In an embodiment, the pH may preferably be 5 to 9. Reasons for such preference may be, for example, improvement in solution stability and the like.
Measurement conditions (pH) may be, for example, the following conditions and the like.

Measurement instrument: product name "pH Meter D-52" manufactured by HORIBA, Ltd.
Measurement temperature: 25°C

Applications (binder aqueous solution of separator for power storage device) may include, for example, a binder aqueous solution of a separator for a battery, a binder aqueous solution of a separator for a non-aqueous secondary battery, a binder aqueous solution of a separator for a lithium-ion battery, a binder aqueous solution of a separator for a sodium-ion battery, etc.

[Slurry of separator for power storage device: slurry]

The present disclosure relates to a slurry of a separator for a power storage device including the above binder aqueous solution of a separator for a power storage device and a non-conductive particle.
The "slurry" means a suspension of a liquid and solid particles.
The water-soluble poly(meth)acrylamide, the water, the other binder, and the thickener may be, for example, the agents described above and the like.
A mass% content (water-soluble poly(meth)acrylamide/non-volatile content of slurry of separator for power storage device) may be, for example, 10 mass%, 9 mass%, 8 mass%, 7 mass%, 6 mass%, 5 mass%, 4 mass%, 3 mass%, 2 mass%, 1 mass%, 0.9 mass%, 0.7 mass%, 0.5 mass%, 0.3 mass%, 0.1 mass%, etc. In an embodiment, the mass% content may preferably be 0.1 mass% to 10 mass%.
A mass% content (water/slurry of separator for power storage device) may be, for example, 80 mass%, 75 mass%, 70 mass%, 65 mass%, 60 mass%, 55 mass%, 50 mass%, 45 mass%, 40 mass%, 35 mass%, 30 mass%, etc. In an embodiment, the content may preferably be 30 mass% to 80 mass%.
A content (other binder) and a content (thickener) may be, for example, the amounts described above and the like.

<Non-conductive particle>

The non-conductive particle may be used alone or as a combination of two or more types.
The non-conductive particle may be, for example, an oxide particle, a nitride particle, a covalently bonded crystal particle, a sparingly soluble ionic crystal particle, a clay microparticle, etc.
The oxide particle may be, for example, aluminum oxide (alumina), aluminum oxide hydrate (boehmite (AlOOH), gibbsite ($Al(OH)_3$)), bakelite, iron oxide, silicon oxide, magnesium oxide (magnesia), calcium oxide, titanium oxide (titania), $BaTiO_3$, ZrO, alumina-silica composite oxide, etc.
The nitride particle may be, for example, aluminum nitride, silicon nitride, boron nitride, etc.
The covalently bonded crystal particle may be, for example, silicon, diamond, etc.
The sparingly soluble ionic crystal particle may be, for example, barium sulfate, calcium fluoride, barium fluoride, etc.
The clay microparticle may be, for example, a clay microparticle such as silica, talc, montmorillonite, etc.
In an embodiment, the non-conductive particle may preferably be boehmite, alumina, magnesium oxide, and barium sulfate, and more preferably boehmite. In the case where the non-conductive particle is these, water absorption of the separator becomes low, and heat resistance of the separator becomes high.
An average particle diameter (non-conductive particle) may be, for example, 30 μm, 25 μm, 20 μm, 15 μm, 10 μm, 5 μm, 1 μm, 0.5 μm, 0.1 μm, 0.05 μm, 0.01 μm, etc. In an embodiment, the average particle diameter may preferably be 0.01 μm to 30 μm.
A mass% content (non-conductive particle/non-volatile content of slurry of separator for power storage device) may be, for example, 99.9 mass%, 95 mass%, 90 mass%, 80 mass%, 70 mass%, 60 mass%, 50 mass%, 40 mass%, 30 mass%, 20 mass%, 10 mass%, 5 mass%, 1 mass%, 0.5 mass%, 0.2 mass%, 0.1 mass%, etc. In an embodiment, the content may preferably be 0.1 mass% to 99.9 mass%.
A mass% content (water-soluble poly(meth)acrylamide/non-conductive particle) may be, for example, 15 mass%, 14 mass%, 13 mass%, 12 mass%, 11 mass%, 10 mass%, 9 mass%, 8 mass%, 7 mass%, 6 mass%, 5 mass%, 4 mass%, 3 mass%, 2 mass%, 1.5 mass%, 1 mass%, etc. In an embodiment, the content may preferably be 1 mass% to 15 mass%, more preferably 1.5 mass% to 14 mass%, and even more preferably 2 mass% to 12 mass%.

<Slurry viscosity adjusting solvent>

In an embodiment, the slurry of a separator for a power storage device may optionally include a slurry viscosity adjusting solvent. The slurry viscosity adjusting solvent may be used alone or as a combination of two or more types.
The slurry viscosity adjusting solvent may be, for example, an amide solvent, a hydrocarbon solvent, an alcohol solvent, a ketone solvent, an ether solvent, an ester solvent, an amine solvent, a lactone solvent, a sulfoxide and sulfone solvent, water, etc.
The amide solvent may be, for example, N-methylpyrrolidone, dimethylformamide, N,N-dimethylacetamide, etc.
The hydrocarbon solvent may be, for example, toluene, xylene, n-dodecane, tetralin, etc.
The alcohol solvent may be, for example, methanol, ethanol, 2-propanol, isopropyl alcohol, 2-ethyl-1-hexanol, 1-nonanol, lauryl alcohol, etc.
The ketone solvent may be, for example, acetone, methyl ethyl ketone, cyclohexanone, phorone, acetophenone, isophorone, etc.
The ether solvent may be, for example, dioxane, tetrahydrofuran (THF), etc.
The ester solvent may be, for example, benzyl acetate, isopentyl butyrate, methyl lactate, ethyl lactate, butyl lactate, etc.
The amine solvent may be, for example, o-toluidine, m-toluidine, p-toluidine, etc.
The lactone solvent may be, for example, γ-butyrolactone, δ-butyrolactone, etc.
The sulfoxide and sulfone solvent may be, for example, dimethyl sulfoxide, sulfolane, etc.
In an embodiment, the slurry viscosity adjusting solvent may preferably be N-methylpyrrolidone. Reasons for such preference may be, for example, improvement in coating workability and the like.
A mass% content (slurry viscosity adjusting solvent/slurry of separator for power storage device) may be, for example, 10 mass%, 9 mass%, 8 mass%, 7 mass%, 6 mass%, 5 mass%, 4 mass%, 3 mass%, 2 mass%, 1 mass%, 0 mass%, etc. In an embodiment, the content may preferably be 0 mass% to 10 mass%.

<Additive>

The slurry may optionally include an agent (additive) that does not correspond to any of the water-soluble poly(meth)acrylamide, the metal ion having a valence of 2 or higher, the water, the other binder, the thickener, the non-conductive particle, and the slurry viscosity adjusting solvent. The additive may be, for example, the agents described

above and the like.

A mass% content (additive/water-soluble poly(meth)acrylamide) may be, for example, 0 mass% to 5 mass%, less than 1 mass%, less than 0.1 mass%, less than 0.01 mass%, 0 mass%, etc.

A mass% content (additive/non-conductive particle) may be, for example, 0 mass% to 5 mass%, less than 1 mass%, less than 0.1 mass%, less than 0.01 mass%, 0 mass%, etc.

Manufacturing of the slurry may be carried out by mixing the water-soluble poly(meth)acrylamide, the metal ion having a valence of 2 or higher, the non-conductive particle, the water, and, wherever required, the other binder, the thickener, the slurry viscosity adjusting solvent, and the additive.

A mixing means may be, for example, a ball mill, a sand mill, a pigment disperser, a grinding machine, an ultrasonic disperser, a homogenizer, a planetary mixer, a Hobart mixer, etc.

Applications (slurry of separator for power storage device) may include, for example, a slurry of a separator for a non-aqueous secondary battery, a slurry of a separator for a lithium-ion battery, a slurry of a separator for a sodium-ion battery, etc.

[Separator for power storage device: separator]

The present disclosure relates to a separator for a power storage device having a dried product of the slurry of a separator for a power storage device described above on a base material.

Manufacturing of the separator for a power storage device may be carried out by applying the slurry of a separator for a power storage device to one surface or both surfaces of a base material and drying the slurry.

The base material may be, for example, a porous polyolefin resin base material, a plastic nonwoven fabric, etc.

(Porous polyolefin resin base material)

The "porous polyolefin resin base material" means a fine porous film containing 50 mass% or more of a resin of polyolefin, a mixture or a copolymer thereof, etc.

The polyolefin resin may be used alone or as a combination of two or more type. The polyolefin resin may be, for example, a homopolymer, a copolymer, etc. of ethylene, propylene, 1-butene, 4-methyl-1-pentene, 1-hexene, 1-octene, etc.

A tactic structure of the polyolefin may be, for example, isotactic, syndiotactic, atactic, etc.

In an embodiment, the polyolefin resin may preferably be high-density polyethylene, and more preferably, high-density polyethylene and polypropylene.

In an embodiment, from the perspective of shutdown performance and the like, a mass% content (polyolefin resin/base material) may preferably be 50 mass% to 100 mass%, more preferably 60 mass% to 100 mass%, and even more preferably 70 mass% to 100 mass%. Reasons for such preference may be, for example, improvement in shutdown performance and the like.

The porous polyolefin resin base material may optionally include a filler and a fibrous compound. A strength, a hardness, and a thermal shrinkage rate of the porous polyolefin resin base material may be controlled according to the filler and the fibrous compound.

The porous polyolefin resin base material may be subjected to a surface treatment as required.

The surface treatment may be, for example, a coating treatment, an electromagnetic radiation treatment, a plasma treatment, etc.

In an embodiment, the surface treatment may preferably be a coating treatment using a polar group-containing polymer. With the coating treatment, electrolyte impregnation and adhesion with the dried product of the slurry may be enhanced. The polar group may be, for example, carboxylic acid group, hydroxyl group, sulfonic acid group, etc.

In an embodiment, a thickness (porous polyolefin resin base material) may preferably be 2 $\mu$m to 100 $\mu$m, and more preferably 5 $\mu$m to 50 $\mu$m.

(Plastic nonwoven fabric)

The plastic nonwoven fabric may be, for example, a nonwoven fabric composed solely of a synthetic fiber, and the like.

A material (synthetic fiber) may be, for example, polyolefin-based resin, polyester-based resin, acrylonitrile-based resin, polyamide-based resin, polyvinyl acetate-based resin, ethylene-vinyl acetate copolymer resin, acrylic resin, polyvinyl chloride-based resin, polyvinylidene chloride-based resin, polyvinyl ether-based resin, polyvinyl ketone-based resin, polyether-based resin, polyvinyl alcohol-based resin, diene-based resin, polyurethane-based resin, phenolic resin, melamine-based resin, furan-based resin, urea-based resin, aniline-based resin, unsaturated polyester-based resin, alkyd resin, fluorine-based resin, silicone-based resin, polyamide-imide-based resin, polyphenylene sulfide-based resin,

polyimide-based resin, polycarbonate-based resin, polyazomethine-based resin, polyester amide resin, polyether ether ketone-based resin, poly-p-phenylene benzobisoxazole resin, polybenzimidazole-based resin, ethylene-vinyl alcohol copolymer-based resin, etc.

The polyolefin-based resin may be, for example, polypropylene, polyethylene, polymethylpentene, ethylene-vinyl alcohol copolymer, olefin-based copolymer, etc.

The polyester-based resin may be, for example, polyethylene terephthalate (PET)-based resin, polybutylene terephthalate (PBT)-based resin, polytrimethylene terephthalate (PPT)-based resin, polyethylene naphthalate (PEN)-based resin, polybutylene naphthalate-based resin, polyethylene isophthalate-based resin, wholly aromatic polyester-based resin, etc.

The acrylonitrile-based resin may be, for example, polyacrylonitrile, a copolymer of acrylonitrile with a (meth) acrylic acid derivative, vinyl acetate, etc.

The polyamide-based resin may be, for example, aliphatic polyamide, wholly aromatic polyamide, semi-aromatic polyamide, etc.

The aliphatic polyamide may be, for example, nylon and the like.

The wholly aromatic polyamide may be, for example, poly-p-phenylene terephthalamide, poly-p-phenylene terephthalamide-3,4-diphenyl ether terephthalamide, poly-m-phenylene isophthalamide, etc.

The "semi-aromatic polyamide" means a polyimide in which a part of the main chain of the aromatic polyamide is an aliphatic chain.

The fiber (plastic nonwoven fabric) may optionally include a fiber other than the synthetic resin fiber.

The fiber other than the synthetic resin fiber may be, for example, solvent-spun cellulose, fibrillated solvent-spun cellulose, regenerated cellulose, fibrillated regenerated cellulose, natural cellulose fiber, pulped natural cellulose fiber, fibrillated natural cellulose fiber, inorganic fiber, etc.

A mass% content (fiber other than synthetic fiber/nonwoven fabric) may preferably be 30 mass% or less, more preferably 20 mass% or less, and even more preferably 10 mass% or less.

A form (fiber) may be, for example, a single fiber, a composite fiber, etc.

The "single fiber" means a fiber composed of a single resin. The "composite fiber" means a fiber composed of two or more types of resins.

The composite fiber may be of, for example, a core-sheath type, an eccentric type, a side-by-side type, an islands-in-sea type, an orange type, a multiple bimetal type, etc.

In an embodiment, an average fiber diameter (plastic nonwoven fabric) may preferably be 1 μm to 15 μm, and more preferably 1 μm to 10 μm.

The "average fiber diameter" means an average value of fiber diameters of 20 fibers randomly selected from a scanning electron microscope photograph.

In an embodiment, an average pore diameter (plastic nonwoven fabric) may preferably be 1 μm to 20 μm, more preferably 3 μm to 20 μm, and even more preferably 5 μm to 20 μm.

The "pore diameter" means a width of a gap between fibers. The "average pore diameter" means an average value of pore diameters of 20 fibers randomly selected from a scanning electron microscope photograph.

A thickness (plastic nonwoven fabric) may preferably be 5 μm to 25 μm, and more preferably 5 μm to 15 μm.

<Manufacturing method (separator for power storage device)>

A manufacturing method (separator for a power storage device) may be, for example, a method including a coating step of coating a slurry of a separator for a power storage device on a base material, and a drying step of drying the coated slurry of a separator for a power storage device.

(Coating step)

A coating method may be performed by, for example, coating, printing, transferring, immersion, etc.

The coating may be, for example, blade coating, rod coating, reverse roll coating, lip coating, die coating, curtain coating, air knife coating, etc.

The printing may be, for example, flexographic printing, screen printing, offset printing, gravure printing, inkjet printing, etc.

The transferring may be, for example, roll transferring, film transferring, etc.

The immersion may be, for example, dipping and the like.

(Drying step)

A drying method may be, for example, drying by air (warm air, hot air, low-humidity air, etc.), drying by irradiation

(infrared ray, far-infrared ray, electron beam, etc.), vacuum drying, etc.

A drying temperature may preferably be 40°C to 90°C, and more preferably 50°C to 80°C.

A drying time may preferably be 5 seconds to 3 minutes, and more preferably 15 seconds to 2 minutes.

The manufacturing method of the separator for a power storage device may optionally include a pressing step.

A pressing means may be, for example, a die press, a roll press, etc.

The separator for a power storage device may be used, for example, as a separator for a battery, a separator for a non-aqueous secondary battery, a separator for a lithium-ion battery, a separator for a sodium-ion battery, etc.

[Separator/electrode laminate for power storage device: separator/electrode laminate]

The present disclosure relates to a separator/electrode laminate for a power storage device having a dried product of the slurry of a separator for a power storage device described above on an active material side of an electrode. The separator/electrode laminate for a power storage device is obtained by applying the slurry of a separator for a power storage device described above to an electrode and drying the slurry.

A manufacturing method of the separator/electrode laminate for a power storage device may be, for example, a method including the following steps.

(1) A step of applying an electrode material-containing slurry to a current collector
(2) A step of drying the electrode material-containing slurry
(3) A step of pressing a dried product of the electrode material-containing slurry
(4) A step of applying a slurry of a separator for a power storage device to the dried product of the electrode material-containing slurry
(5) A step of drying the slurry of a separator for a power storage device

An application method, a drying method, and a pressing method may be, for example, the methods described above.

Applications (separator/electrode laminate for power storage device) may include, for example, a separator/-electrode laminate for a battery, a separator/negative electrode laminate for a battery, a separator/positive electrode laminate for a battery, a separator/electrode laminate for a non-aqueous secondary battery, a separator/negative electrode laminate for a non-aqueous secondary battery, a separator/positive electrode laminate for a non-aqueous secondary battery, a separator/electrode laminate for a lithium-ion battery, a separator/negative electrode laminate for a lithium-ion battery, a separator/positive electrode laminate for a lithium-ion battery, a separator/electrode laminate for a sodium-ion battery, a separator/negative electrode laminate for a sodium-ion battery, a separator/positive electrode laminate for a sodium-ion battery, etc.

[Power storage device]

The present disclosure relates to a power storage device including the separator for a power storage device described above and/or the separator/electrode laminate for a power storage device described above.

(Electrolyte solution)

The power storage device includes an electrolyte solution. The electrolyte solution may be, for example, a solution in which a supporting electrolyte is dissolved in a non-aqueous solvent, and the like.

The non-aqueous solvent may be used alone or as a combination of two or more types.

The non-aqueous solvent may be, for example, a chain carbonate solvent, a cyclic carbonate solvent, a chain ether solvent, a cyclic ether solvent, a chain ester solvent, a cyclic ester solvent, acetonitrile, etc.

The chain carbonate solvent may be, for example, diethyl carbonate, dimethyl carbonate, ethyl methyl carbonate, etc.

The cyclic carbonate solvent may be, for example, ethylene carbonate, propylene carbonate, butylene carbonate, etc.

The chain ether solvent may be, for example, 1,2-dimethoxyethane and the like.

The cyclic ether solvent may be, for example, tetrahydrofuran, 2-methyltetrahydrofuran, sulfolane, 1,3-dioxolane, etc.

The chain ester solvent may be, for example, methyl formate, methyl acetate, methyl propionate, etc.

The cyclic ester solvent may be, for example, γ-butyrolactone, γ-valerolactone, etc.

In an embodiment, the non-aqueous solvent may preferably be a combination of cyclic carbonate and chain carbonate.

The supporting electrolyte may be used alone or as a combination of two or more types.

The supporting electrolyte may be, for example, a lithium salt and the like. The lithium salts may be, for example, $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, $(C_2F_5SO_2)NLi$, etc. In an embodiment, from the perspective of increasing lithium ion conductivity, the supporting electrolyte may preferably be $LiPF_6$, $LiClO_4$, and $CF_3SO_3Li$.

In an embodiment, the non-aqueous electrolyte solution may optionally include a film-forming agent. The film-forming agent may be used alone or as a combination of two or more types.

The film-forming agent may be, for example, carbonate, alkene sulfide, sultone, acid anhydride, etc.

The carbonate may be, for example, vinylene carbonate, vinyl ethylene carbonate, vinyl ethyl carbonate, methyl phenyl carbonate, fluoroethylene carbonate, difluoroethylene carbonate, etc.

The alkene sulfide may be, for example, ethylene sulfide, propylene sulfide, etc.

The sultone may be, for example, 1,3-propane sultone, 1,4-butane sultone, etc.

The acid anhydride may be, for example, maleic anhydride, succinic anhydride, etc.

In an embodiment, a mass% content (film-forming agent/total electrolyte solution) may preferably be 0 mass% to 10 mass%, more preferably 0 mass% to 8 mass%, even more preferably 0 mass% to 5 mass%, and particularly preferably 0 mass% to 2 mass%.

A form (power storage device) may be, for example, a cylinder type with sheet electrodes and a separator configured in a spiral shape, a cylinder type with an inside-out structure combining pellet electrodes and a separator, a coin type with pellet electrodes and a separator stacked, etc.

A manufacturing method (power storage device) may be, for example, a method described in Japanese Patent Application Laid-Open No. 2013-089437 and the like.

Applications (power storage device) may include, for example, a battery, a non-aqueous secondary battery, a lithium-ion battery, a sodium-ion battery, etc.

## Examples

Hereinafter, the present invention will be specifically described with reference to Examples and Comparative Examples. However, the above description and Examples below are not intended to limit the present invention. The present invention is limited only by the scope of the claims. Hereinafter, unless otherwise specified, numerical values of parts, %, etc. are based on mass.

### Example 1

2300 g of ultrapure water, 400 g (5.63 mol) of acrylamide, and 8.05 g (0.051 mol) of sodium methallyl sulfonate were placed into a reaction apparatus including a stirrer, a thermometer, a reflux condenser, and a nitrogen gas introduction tube. After oxygen was removed from the reaction system by passing nitrogen gas, the temperature was raised to 50°C. Then, 4.0 g of 2,2'-azobis-2-amidinopropane dihydrochloride (product name "NC-32" manufactured by Nippoh Chemicals Co., Ltd.) and 30 g of ultrapure water were added, the temperature was raised to 80°C, and reaction was carried out for 3 hours to obtain an aqueous solution. The obtained aqueous solution was added with calcium hydroxide, magnesium hydroxide, and ferric nitrate in amounts for a metal ion to become a value shown in the table below, to obtain a binder aqueous solution of a separator for a power storage device.

Unless specifically mentioned, Examples other than Example 1 and Comparative Examples were carried out in the same manner as Example 1, except for the changes shown in the table below.

[Table 1]

| | AM (mol %) | DMAA (mol %) | SMAS (mol %) | ATBS (mol %) | AA (mol %) | AANa (mol %) | MAANa (mol%) | AN (mol %) | MBAA (mol %) | Ca (ppm) | Mg (ppm) | Fe (ppm) | Mn (ppm) | Total metal content | Coatabi-lity | Binding property of non-conductive particle |
|---|---|---|---|---|---|---|---|---|---|---|---|---|---|---|---|---|
| Example 1 | 99.1 | | 0.9 | | | | | | | 0.3 | 0.2 | 2 | 0 | 2.5 | ○ | A |
| Example 2 | 99.1 | | 0.9 | | | | | | | 0.5 | 0.2 | 2 | 0 | 2.7 | ○ | A |
| Example 3 | 99.9 | | 0.1 | | | | | | | 0.3 | 0.2 | 2 | 0 | 2.5 | ○ | A |
| Example 4 | 99.9 | | 0.1 | | | | | | | 0.5 | 0.2 | 2 | 0 | 2.7 | ○ | A |
| Example 5 | 99.9 | | 0.1 | | | | | | | 0.3 | 0 | 0 | 0.1 | 0.4 | ○ | A |
| Example 6 | 99.9 | | 0.1 | | | | | | | 0.1 | 0.2 | 0.2 | 0.1 | 0.6 | ○ | A |
| Example 7 | 99.9 | | 0.1 | | | | | | | 11 | 2.6 | 0.2 | 0.2 | 14 | ○ | A |
| Example 8 | 99.9 | | 0.1 | | | | | | | 11 | 8.6 | 0.2 | 0.2 | 20 | ○ | B |
| Example 9 | 99.9 | | 0.1 | | | | | | | 21 | 13 | 10 | 1 | 45 | ○ | B |
| Example 10 | 99.9 | | 0.1 | | | | | | | 0 | 0.2 | 3 | 0 | 3.2 | ○ | A |
| Example 11 | 99.7 | | 0.05 | 0.25 | | | | | | 0.5 | 0.2 | 2 | 0 | 2.7 | ○ | A |
| Example 12 | 65 | | | | | 5 | | 30 | | 0.5 | 0.2 | 2 | 0 | 2.7 | ○ | A |
| Example 13 | 79.9 | | 0.1 | | 2 | 18 | | | | 0.5 | 0.2 | 2 | 0 | 2.7 | ○ | A |
| Example 14 | 15 | 75 | | | 10 | | | | | 1.6 | 1.1 | 0 | 1 | 3.7 | ○ | A |
| Example 15 | 15 | 75 | | | 10 | | | | | 21 | 13 | 10 | 1 | 45 | ○ | B |
| Example 16 | 80 | | | | | | 20 | | | 1.6 | 1.1 | 0 | 1 | 3.7 | ○ | A |
| Example 17 | 80 | | | | | | 20 | | | 21 | 13 | 10 | 1 | 45 | ○ | B |

(continued)

| | AM (mol %) | DMAA (mol %) | SMAS (mol %) | ATBS (mol %) | AA (mol %) | AANa (mol %) | MAANa (mol%) | AN (mol %) | MBAA (mol %) | Ca (ppm) | Mg (ppm) | Fe (ppm) | Mn (ppm) | Total metal content | Coatabi-lity | Binding property of non-conductive particle |
|---|---|---|---|---|---|---|---|---|---|---|---|---|---|---|---|---|
| Example 18 | 89.9 9 | | 0.01 | | | | | 10 | | 0.3 | 0.2 | 2 | 0 | 2.5 | ○ | A |
| Example 19 | 89.9 9 | | 0.01 | | | | | 10 | | 21 | 13 | 10 | 1 | 45 | ○ | B |
| Example 20 | 78.9 | | 0.1 | 1 | | | | 20 | | 0.3 | 0.2 | 2 | 0 | 2.5 | ○ | A |
| Example 21 | 78.9 | | 0.1 | 1 | | | | 20 | | 21 | 13 | 10 | 1 | 45 | ○ | B |
| Example 22 | 99.4 | | 0.5 | | | | | | 0.1 | 0.3 | 0.2 | 2 | 0 | 2.5 | ○ | A |
| Example 23 | 99.4 | | 0.5 | | | | | | 0.1 | 21 | 13 | 10 | 1 | 45 | ○ | B |
| Comparative Example 1 | 99.9 | | 0.1 | | | | | | | 0 | 0 | 0 | 0 | 0 | × | C |
| Comparative Example 2 | 99.9 | | 0.1 | | | | | | | 21 | 13 | 20 | 1 | 55 | × | C |
| Comparative Example 3 | 65 | | | | | 5 | | 30 | | 0 | 0 | 0 | 0 | 0 | × | C |
| Comparative Example 4 | 65 | | | | | 5 | | 30 | | 21 | 13 | 20 | 1 | 55 | × | C |
| Comparative Example 5 | 79.9 | | 0.1 | | 2 | 18 | | | | 0 | 0 | 0 | 0 | 0 | × | C |

(continued)

| | AM (mol %) | DMAA (mol %) | SMAS (mol %) | ATBS (mol %) | AA (mol %) | AANa (mol %) | MAANa (mol%) | AN (mol %) | MBAA (mol %) | Ca (ppm) | Mg (ppm) | Fe (ppm) | Mn (ppm) | Total metal content | Coatabi-lity | Binding property of non-conductive particle |
|---|---|---|---|---|---|---|---|---|---|---|---|---|---|---|---|---|
| Comparative Exam-ple 6 | 79.9 | | 0.1 | | 2 | 18 | | | | 21 | 13 | 20 | 1 | 55 | × | C |
| Comparative Exam-ple 7 | 15 | 75 | | | 10 | | | | | 0 | 0 | 0 | 0 | 0 | × | C |
| Comparative Exam-ple 8 | 15 | 75 | | | 10 | | | | | 21 | 13 | 20 | 1 | 55 | × | C |
| Comparative Exam-ple 9 | Polyvinyl alcohol | | | | | | | | | 0.3 | 0.2 | 2 | 0 | 2.5 | × | C |
| Comparative Exam-ple 10 | Sodium carboxymethyl cellulose | | | | | | | | | 0.3 | 0.2 | 2 | 0 | 2.5 | × | C |

<Description of abbreviations>

- AM: acrylamide ("50% acrylamide" manufactured by Mitsubishi Chemical Corporation)
- DMAA: N,N-dimethylacrylamide ("DMAA" manufactured by KJ Chemicals Corporation)
- SMAS: sodium methallyl sulfonate
- ATBS: acrylamide t-butylsulfonic acid ("ATBS" manufactured by Toagosei Co., Ltd.)
- AA: acrylic acid ("80% acrylic acid" manufactured by Osaka Organic Chemical Industry Ltd.)
- MAA: methacrylic acid ("methacrylic acid" manufactured by Mitsubishi Chemical Corporation)
- AANa: generated by neutralizing constituent unit derived from acrylic acid using sodium hydroxide ("48% sodium hydroxide solution" manufactured by Kanto Chemical Co., Inc.)
- MAANa: generated by neutralizing constituent unit derived from methacrylic acid using sodium hydroxide ("48% sodium hydroxide solution" manufactured by Kanto Chemical Co., Inc.)
- AN: acrylonitrile ("acrylonitrile" manufactured by Mitsubishi Chemical Corporation)
- MBAA: N,N'-methylenebisacrylamide
- Polyvinyl alcohol: partially saponified type, with an average degree of polymerization of approximately 3100 to 3900
- Sodium carboxymethyl cellulose: 1% aqueous solution, 7800 mPa·s, manufactured by DKS Co. Ltd.

<Action evaluation of separator for power storage device>

(1) Manufacturing of slurry of separator for power storage device

5 parts by mass (on a solid content basis) of the binder aqueous solution of a separator for a power storage device obtained in Examples and 113 parts by mass of water were stirred and mixed, 100 parts by mass of boehmite (average particle diameter 0.8 μm) were added as a non-conductive particle, and were dispersed and stirred for 60 minutes at 15000 rpm using a homogenizer (T25 digital ULTRA-TURRAX manufactured by IKA). Furthermore, ion-exchanged water was added to adjust the viscosity, and a slurry of a separator for a power storage device was manufactured.

(2) Manufacturing of separator: lamination of layer (coating layer) of slurry for separator

A single-layer polyethylene separator base material (PE base material) manufactured according to a wet method with a width of 250 mm, a length of 200 mm, and a thickness of 6 μm was prepared. The slurry of a separator for a power storage device was coated on one surface of the separator using a gravure coater such that a post-drying thickness becomes 3.0 μm, and the slurry was dried to obtain a separator for a power storage device.

(3) Manufacturing of power storage device

A power storage device was manufactured using the above separator and materials described below. The power storage device manufactured using the binder aqueous solution of a separator for a power storage device of Examples functioned without any problems.

Positive electrode active material: lithium nickel manganese cobalt oxide
Negative electrode active material: graphite
Electrolyte solution: 1 mol/L mixed solvent solution of ethylene carbonate (EC)/dimethyl carbonate (DMC) (volume ratio 3/7) of lithium hexafluorophosphate ($LiPF_6$)

<Coatability>

The binder aqueous solution for a power storage device was coated on a plastic nonwoven fabric using a bar coater. The coated nonwoven fabric was evaluated according to the following criteria.

◦: Coating streaks or blurs do not occur.
×: Coating streaks or blurs occur.

<Binding property of non-conductive particle>

The obtained separator was cut into a 10 cm × 10 cm square, and its mass (X0) was accurately weighed. After

one side was attached to a cardboard and fixed, a weight with a diameter of 5 cm and a mass of 900 g, covered with a cotton cloth, was placed on a ceramic layer side, and these were rubbed with each other for 10 minutes at a rotational speed of 50 rpm. Subsequently, a mass (X1) was accurately measured again. Resistance to powder fall-off of the separator was evaluated according to the following criteria.

$$\text{Binding property of non-conductive particle} = \{(X0 - X1) / X0\} \times 100$$

A: Binding property of non-conductive particle is less than 2 mass%.
B: Binding property of non-conductive particle is 2 mass% or more and less than 5 mass%.
C: Binding property of non-conductive particle is 5 mass% or more.

## Claims

**1.** A binder aqueous solution of a separator for a power storage device, wherein

the binder aqueous solution of a separator for a power storage device comprises a water-soluble poly(meth) acrylamide and a metal ion having a valence of 2 or higher, and
a content of the metal ion having a valence of 2 or higher is 0.001 mass ppm to 47 mass ppm, based on a mass of the binder aqueous solution of a separator for a power storage device.

**2.** A slurry of a separator for a power storage device comprising:
the binder aqueous solution of a separator for a power storage device according to claim 1, and a non-conductive particle.

**3.** A separator for a power storage device comprising:
a dried product of the slurry of a separator for a power storage device according to claim 2 on a base material.

**4.** A separator/electrode laminate for a power storage device comprising:
a dried product of the slurry of a separator for a power storage device according to claim 2 on an active material side of an electrode.

**5.** A power storage device comprising:
the separator for a power storage device according to claim 3 and/or the separator/electrode laminate for a power storage device according to claim 4.

**INTERNATIONAL SEARCH REPORT**

International application No. **PCT/JP2023/010215**

**A. CLASSIFICATION OF SUBJECT MATTER**

***H01M 50/403***(2021.01)i; ***H01M 50/42***(2021.01)i; ***H01M 50/431***(2021.01)i; ***H01M 50/46***(2021.01)i
FI: H01M50/403 D; H01M50/42; H01M50/431; H01M50/46

According to International Patent Classification (IPC) or to both national classification and IPC

**B. FIELDS SEARCHED**

Minimum documentation searched (classification system followed by classification symbols)

H01M50/403; H01M50/42; H01M50/431; H01M50/46

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-162313 A (NIPPON ZEON CO., LTD.) 07 September 2015 (2015-09-07) | 1-5 |
| A | JP 2015-118908 A (JSR CORP.) 25 June 2015 (2015-06-25) | 1-5 |
| A | JP 2013-522843 A (LG CHEM, LTD.) 13 June 2013 (2013-06-13) | 1-5 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 June 2023** | **13 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/010215**

| Patent document cited in search report | Publication date (day/month/year) | Patent family member(s) | Publication date (day/month/year) |
|---|---|---|---|
| JP 2015-162313 A | 07 September 2015 | (Family: none) | |
| JP 2015-118908 A | 25 June 2015 | CN 105378989 A | |
| | | KR 10-2016-0033692 A | |
| JP 2013-522843 A | 13 June 2013 | US 2013/0017429 A1 | |
| | | WO 2011/115376 A2 | |
| | | EP 2549564 A2 | |
| | | KR 10-2011-0104791 A | |
| | | CN 102893427 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018006333 A
- JP 2013089437 A


### Non-patent literature cited in the description


- Handbook of Chemistry: Pure Chemistry II. Chemical Society of Japan, 325